# EUROPEAN PATENT APPLICATION

(11) **EP 4 682 517 A1**
(43) Date of publication of application: **21.01.2026**
(21) Application number: 25188981.2
(22) Date of filing: 11.07.2025
(51) Int. Cl.: G01N 23/04, G01V 5/22

(54) **X-RAY INSPECTION DEVICE**

(30) Priority: 19.07.2024 JP 2024116162
(71) Applicant: Ishida Co., Ltd., Kyoto-shi Kyoto 606-8392 (JP)
(72) Inventor: YURUGI, Futoshi, Ritto-shi, Shiga, 520-3026 (JP); HIROSE, Osamu, Ritto-shi, Shiga, 520-3026 (JP); TOMINAGA, Kota, Ritto-shi, Shiga, 520-3026 (JP)
(74) Representative: Global IP Europe Patentanwaltskanzlei

(57) **Abstract**

[Problem] To provide an X-ray inspection device (1) that can acquire two images having different energy bands by means of one X-ray detection unit (7).

[Solving method] An X-ray inspection device (1) includes a conveying unit (5), an X-ray irradiation unit (6) configured to irradiate an article (G) conveyed by the conveying unit (5) with X-rays, a filter unit (8) configured to reduce a portion of energy included in the X-rays transmitted through the article (G), a sensor unit (7) including a plurality of detecting elements (11) configured to detect each of a first X-ray transmitted through the article (G) and a second X-ray transmitted through the article (G) as well as the filter unit (8), an image generation unit (23) configured to specify the detecting elements (11) detecting the first X-ray and the second X-ray respectively from among the plurality of detecting elements (11) detecting the X-rays in the sensor unit (7), and generate a first image (P1) based on the first X-ray in a first energy band and a second image (P2) based on the second X-ray in a second energy band different from the first energy band in accordance with a specification result, and an inspection unit (24) configured to inspect a quality of the article (G) based on the first image (P1) and the second image (P2).

## Description

### Technical Field

The present invention relates to an X-ray inspection device.

### Background Art

Patent Document 1 discloses an X-ray inspection device including a conveying unit that conveys an inspected object on a conveying surface, a first X-ray source and a second X-ray source that irradiate the inspected object conveyed on the conveyance surface with X-rays of different intensities, a first X-ray line sensor and a second X-ray line sensor disposed in locations facing the first X-ray source and the second X-ray source with the conveyance surface interposed therebetween and configured to output first X-ray image data corresponding to X-rays emitted from the first X-ray source and passing through the inspected object and second X-ray image data corresponding to X-rays emitted from the second X-ray source and passing through the inspected object, respectively, an image combining unit that combines the first X-ray image data and the second X-ray image data and outputs the combined image data as one set of image data corresponding to the inspected object, and a determination unit that determines a presence or an absence of foreign matter in the inspected object on the basis of the image data output by the image combining unit.

### Citation List

### Patent Literature

Patent Document 1: JP 2012-194100 A

### Summary of Invention

### Technical Problem

The X-ray inspection device described above includes two X-ray irradiation units (X-ray sources) and two X-ray detection units (line sensors), thereby generating an image based on the two X-rays having different energy bands and inspecting an article (inspected object) using the two images. In the configuration thus including the two X-ray detection units, it is necessary to position the two X-ray detection units, adjust a time difference, and the like, resulting in poor operability in terms of setup and the like. Thus, in the X-ray inspection device, preferably one (integrated type) X-ray detection unit is provided from the viewpoint of operability and the like. However, when there is one X-ray detection unit, two images having different energy bands cannot be acquired.

An aspect of the present invention is to provide an X-ray inspection device that can acquire two images having different energy bands by one X-ray detection unit.

### Solution to Problem

(1) An X-ray inspection device according to an aspect of the present invention includes a conveying unit configured to convey an article in a conveying direction, an X-ray irradiation unit configured to irradiate the article conveyed by the conveying unit with X-rays, a filter unit configured to reduce a portion of energy included in the X-rays transmitted through the article, an X-ray detection unit including a plurality of detecting elements configured to detect each of a first X-ray transmitted through the article and a second X-ray transmitted through the article as well as the filter unit, an image generation unit configured to specify the detecting elements detecting the first X-ray and the second X-ray respectively from among the plurality of detecting elements detecting the X-rays in the X-ray detection unit, and generate a first image based on the first X-ray in a first energy band and a second image based on the second X-ray in a second energy band different from the first energy band in accordance with a specification result, and an inspection unit configured to inspect a quality of the article based on the first image and the second image.
   The X-ray inspection device according to the aspect of the present invention includes the filter unit configured to reduce a portion of the energy included in the X-rays transmitted through the article. Accordingly, in the X-ray inspection device, the detecting elements of the X-ray detection unit detect each of the first X-ray transmitted through the article and the second X-ray transmitted through the article as well as the filter unit. With this configuration, the image generation unit specifies each of the detecting elements detecting the first X-ray and the second X-ray and, on the basis of the specification result, generates the first image on the basis of the first X-ray of the first energy band and the second image on the basis of the second X-ray of the second energy band different from the first energy band. Accordingly, in the X-ray inspection device, two images having different energy bands can be acquired by one X-ray detection unit.
(2) In the X-ray inspection device according to (1) described above, the plurality of detecting elements may be arrayed in a crossing direction horizontally intersecting the conveying direction, and the filter unit may be configured to change a number of columns of the plurality of detecting elements subject to a reduction in the energy. With this configuration, it is possible to match brightnesses of the first image and the second image by changing the number of columns of the detecting elements by the filter unit.
(3) In the X-ray inspection device according to (2) described above, the plurality of detecting elements may include a first detecting element configured to detect the first X-ray and a second detecting element configured to detect the second X-ray, and the image generation unit may be configured to not use a detection result detected by at least one of the detecting elements from among the first detecting element and the second detecting element adjacent to each other in the crossing direction for image generation. Depending on the attachment location of the filter unit, the first detecting element and the second detecting element may not be clearly distinguished from each other in a region where the first detecting element and the second detecting element are adjacent to each other. Therefore, by not using the detection result detected by at least one of the detecting elements from among the first detecting element and the second detecting element adjacent to each other for image generation, it is possible to accurately generate the first image and the second image of each energy band.
(4) In the X-ray inspection device according to (2) or (3) described above, the plurality of detecting elements may include detecting elements arranged in a first column in the crossing direction and detecting elements arranged in a second column parallel to the first column, and a length of the detecting elements in the first column in the crossing direction may be longer than a length of the detecting elements in the second column in the crossing direction. Accordingly, detection failure of foreign matter is less likely to occur.
(5) In the X-ray inspection device according to any one of (1) to (4) described above, the inspection unit may be configured to select one image of the first image or the second image based on a conveyance speed of the conveying unit, and inspect the quality of the article based on the one image. With this configuration, even when the conveyance speed increases, for example, only one image is selected, making it possible to avoid a situation in which a processing capacity cannot keep up with the conveyance speed.
(6) In the X-ray inspection device according to any one of (1) to (5) described above, the inspection unit may be configured to inspect the quality of the article based on a composite image obtained by combining the first image and the second image. With this configuration, a difference between the brightness, contrast, and the like of the first image and the brightness, contrast, and the like of the second image can be suppressed, making it possible to accurately inspect the quality of the article.
(7) The X-ray inspection device according to any one of (1) to (6) described above may further include a specification unit configured to use a predetermined threshold to specify the first X-ray and the second X-ray from the X-rays detected by the plurality of detecting elements. With this configuration, the first X-ray and the second X-ray can be specified, making it possible to generate the first image and the second image appropriately.

### Advantageous Effects of Invention

According to one aspect of the present invention, two images having different energy bands can be acquired by one X-ray detection unit.

### Brief Description of Drawings

FIG. 1 is a configuration diagram illustrating an X-ray inspection device according to an embodiment.
FIG. 2 is a schematic configuration diagram of an interior of a shield box illustrated in FIG. 1.
FIG. 3 is a schematic plan view of a main portion of a sensor unit.
FIG. 4 is a schematic plan view illustrating an arrangement of a filter unit relative to a sensor unit.
FIG. 5 is a functional configuration diagram of a control unit.
FIG. 6(a) and FIG. 6(b) are diagrams illustrating transmission images.
FIG. 7 is a schematic plan view illustrating an arrangement of the filter unit relative to the sensor unit.

### Description of Embodiments

Preferred embodiments of the present invention will be described below in detail with reference to the attached drawings. Note that, in the description of the drawings, like or equivalent elements are denoted by the same reference signs and redundant descriptions thereof will be omitted.

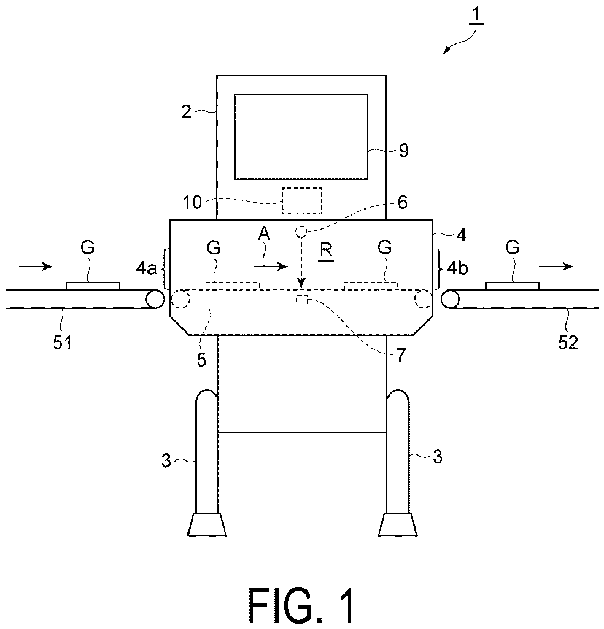

As illustrated in FIG. 1, an X-ray inspection device 1 includes a device main body 2, support legs 3, a shield box 4, a conveying unit 5, an X-ray irradiation unit 6, a sensor unit (X-ray detection unit) 7, a filter unit 8, a display operation unit 9, and a control unit 10. The X-ray inspection device 1 generates an X-ray transmission image of an article G while conveying the article G, and inspects the article G on the basis of the X-ray transmission image. The article G before inspection is conveyed into the X-ray inspection device 1 by an inbound conveyor 51. The article G after inspection is conveyed out from the X-ray inspection device 1 by an outbound conveyor 52.

The device main body 2 accommodates the control unit 10 and other constituent elements. The support legs 3 support the device main body 2. The shield box 4 is provided on the device main body 2. The shield box 4 is a housing for preventing leakage of X-rays (electromagnetic waves) to the outside. Inside the shield box 4, an inspection chamber R is provided in which the inspection of the article G by X-rays is performed. A conveyance inlet 4a and a conveyance outlet 4b are formed in the shield box 4. The article G before the inspection is conveyed into the inspection chamber R from the inbound conveyor 51 through the conveyance inlet 4a. The article G after the inspection is conveyed out from the inspection chamber R to the outbound conveyor 52 through the conveyance outlet 4b.

The conveying unit 5 is a member for conveying the article G and is arranged so as to pass through a center of the shield box 4. The conveying unit 5 conveys the article G in a conveying direction A from the conveyance inlet 4a to the conveyance outlet 4b through the inspection chamber R. A speed (conveyance speed) at which the article G is conveyed by the conveying unit 5 is set by the control unit 10, for example. The conveying unit 5 is, for example, a belt conveyor stretched between the conveyance inlet 4a and the conveyance outlet 4b. Note that the conveying unit 5 may protrude outward from the conveyance inlet 4a and the conveyance outlet 4b.

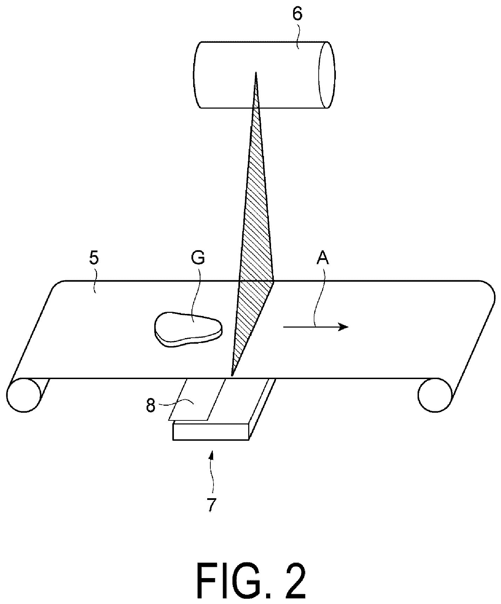

As illustrated in FIG. 1 and FIG. 2, the X-ray irradiation unit 6 is an electromagnetic wave irradiation unit arranged in the shield box 4, and irradiates the article G conveyed by the conveying unit 5 with X-rays. The X-rays include X-rays of various energy regions from low energy (long wavelength) to high energy (short wavelength). Thus, the X-ray irradiation unit 6 irradiates the article G conveyed on the conveying unit 5 with X-rays of a plurality of energy regions. After activation of the X-ray inspection device 1 and before inspection of the article G, the X-ray irradiation unit 6 may perform X-ray irradiation (that is, idling of the X-ray irradiation unit 6). Note that the "low" and "high" in the low energy and high energy described above represent "low" and "high" relatively among the plurality of energy regions irradiated from the X-ray irradiation unit 6, and do not represent specific ranges. Further, power (in particular, current) supplied to the X-ray irradiation unit 6 can be changed manually or automatically. By a change in the power, the output of the X-rays irradiated onto the article G can be changed. Thus, the X-ray having an appropriate intensity for the article G can be irradiated.

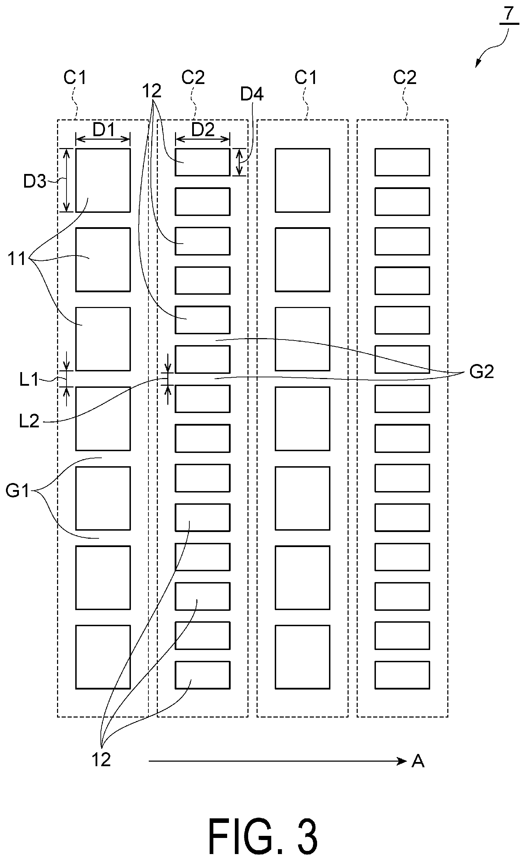

The sensor unit 7 detects the electromagnetic waves. The sensor unit 7 is arranged in the shield box 4 at a location facing the X-ray irradiation unit 6 in a vertical direction. The conveying unit 5 is located between the sensor unit 7 and the X-ray irradiation unit 6 in the vertical direction. FIG. 3 is a schematic plan view of a main portion of the sensor unit 7. As illustrated in FIG. 3, the sensor unit 7 includes a plurality of detecting elements 11 that detect X-rays and are disposed in a planar (two-dimensional) shape. The detecting elements 11 are arranged in a direction (crossing direction) that at least intersects the conveying direction A of the conveying unit 5.

In the present embodiment, the sensor unit 7 is a direct conversion type detection unit that can detect X-rays by a photon counting method. The detecting element 11 is, for example, a sensor (multi-energy sensor) for detecting X-rays in each of a plurality of energy regions transmitted through the article G, and the sensor unit 7 may be a time delay integration sensor (TDI sensor). The detecting element 11 includes, for example, a photon detection type sensor such as a cadmium telluride (CdTe) semiconductor detector. In the detecting element 11, for example, an electron-hole pair is generated by the arrival of photons of the X-ray. A counting process of the photons (photon counting) is performed on the basis of the energy (photon energy) obtained at this time. The counting process is performed by, for example, a calculation unit (not illustrated) included in the sensor unit 7 or the detecting element 11. The result of the counting process (detection result) of each detecting element 11 by the calculation unit is output to the control unit 10 at intervals of a predetermined time, for example. The predetermined time is a time (default time) predetermined by the X-ray inspection device 1. Note that an interval of the predetermined time described above is also referred to as a read interval or a delay time, and can be changed as appropriate by the control unit 10.

The plurality of detecting elements 11 include first detecting elements 12 arranged in a first column C1 in the crossing direction, and second detecting elements 13 arranged in a second column C2 parallel to the first column C1. Thus, a plurality of the first detecting elements 12 are arranged in the first column C1 in the crossing direction described above, and a plurality of the second detecting elements 13 are arranged in the second column C2 in the crossing direction described above. In the sensor unit 7, the first column C1 and the second column C2 are arranged alternately with multiple columns each in the conveying direction A. In other words, a plurality of the first columns C1 and a plurality of the second columns C2 are set in the sensor unit 7, and the first columns C1 and the second columns C2 are arranged alternately in the conveying direction A. Thus, in the conveying direction A, the first detecting elements 12 and the second detecting elements 13 are arranged alternately. Each of the first column C1 and the second column C2 may function as a pseudo-line sensor, for example. Note that, although two first columns C1 and two second columns C2 are illustrated in FIG. 3, the first columns C1 and the second columns C2 may be provided in a quantity of three or more each.

In the present embodiment, a dimension D1 of the first detecting element 12 in the conveying direction A is the same as, but not limited to, a dimension D2 of the second detecting element 13 in the conveying direction A. A dimension D3 of the first detecting element 12 in the crossing direction differs from a dimension D4 of the second detecting element 13 in the crossing direction. In the present embodiment, the dimension D3 is greater than the dimension D4. For example, the dimension D3 is a natural number multiple of 2 or more of the dimension D4. The dimension D1 and the dimension D3 are, for example, preferably 1.0 mm or less, more preferably 0.1 mm to 0.9 mm. The dimension D1 and the dimension D3 are most preferably, for example, 0.3 mm. The dimension D2 and the dimension D4 are preferably 1.0 mm or less, more preferably 0.1 mm to 0.9 mm.

When the number of the first detecting elements 12 in the first column C1 and the number of the second detecting elements 13 in the second column C2 are the same, brightness, contrast, or the like of an image generated utilizing the detection result described above output from the second column C2 may be significantly different from that of an image generated utilizing the detection result output from the first column C1. Thus, in the present embodiment, the number of second detecting elements 13 arranged in the second column C2 is greater than the number of first detecting elements 12 arranged in the first column C1. For example, the number of second detecting elements 13 arranged in the second column C2 is a natural number multiple of 2 or more of the number of first detecting elements 12 arranged in the first column C1. Alternatively, a value obtained by dividing the number of second detecting elements 13 arranged in the second column C2 by the number of first detecting elements 12 arranged in the first column C1 may be the same as a value obtained by dividing the dimension D3 by the dimension D4.

A dimension L1 of a gap G1 between the first detecting elements 12 in the crossing direction may be the same as or different from a dimension L2 of a gap G2 between the second detecting elements 13 in the crossing direction. In the present embodiment, the dimension L1 is greater than the dimension L2. In this case, as viewed in the conveying direction A, portions of the second detecting elements 13 overlap the gap G1. For example, as viewed in the conveying direction A, portions of two adjacent second detecting elements 13 overlap the gap G1. Thus, foreign matter can pass through one or more of the second detecting elements 13 even when passing only through the gap G1. Alternatively, even when the dimensions L1, L2 are the same, a portion of the second detecting element 13 may overlap the gap G1 as viewed in the conveying direction A. That is, regardless of the relationship between the dimensions L1, L2, the first detecting element 12 may overlap a plurality of the second detecting elements 13 in the conveying direction A.

As illustrated in FIG. 2, the filter unit 8 reduces a portion of the energy included in the X-rays transmitted through the article G. The filter unit 8 is, for example, a metal plate. The filter unit 8 has a predetermined thickness. A material and the thickness of the filter unit 8 can be set as appropriate in accordance with the article G. In the present embodiment, the filter unit 8 is disposed at a location close to the sensor unit 7 between the X-ray irradiation unit 6 and the sensor unit 7. A predetermined gap may be provided between the sensor unit 7 and the filter unit 8.

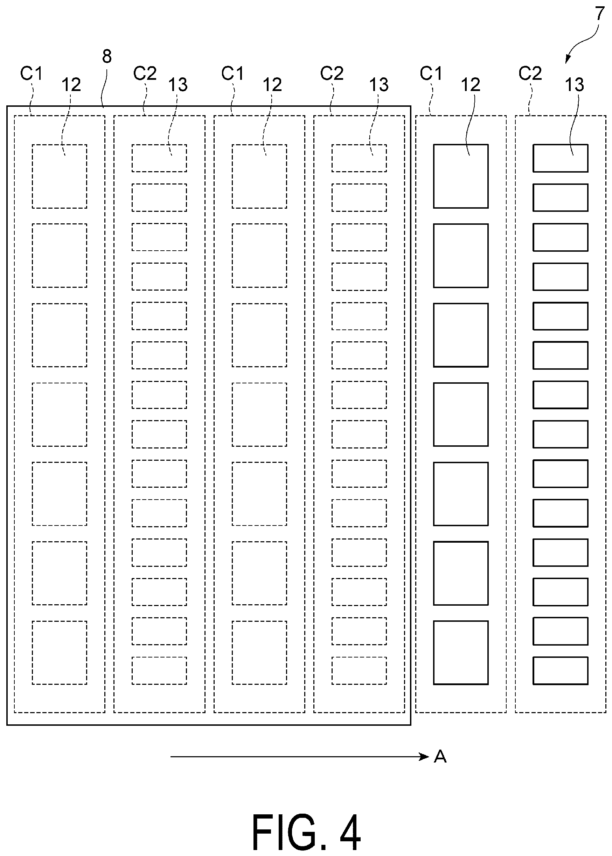

As illustrated in FIG. 4, the filter unit 8 is disposed covering part of the sensor unit 7. In the present embodiment, the filter unit 8 is disposed covering part of the sensor unit 7 upstream in the conveying direction A. The filter unit 8 is disposed so that an end of the filter unit 8 (end in the conveying direction A) does not overlap the detecting elements 11 (first detecting elements 12, second detecting elements 13) of the sensor unit 7 as viewed in a direction (vertical direction) orthogonal to a surface of the filter unit 8.

The filter unit 8 is disposed covering part of the sensor unit 7 so that the brightness of the image generated utilizing the detection result output from the detecting elements 11 of the sensor unit 7 covered by the filter unit 8 is equal to the brightness of the image generated utilizing the detection result output from the detecting elements 11 of the sensor unit 7 not covered by the filter unit 8. The brightness of the image generated utilizing the detection result output from the detecting elements 11 of the sensor unit 7 covered by the filter unit 8 may be lower than the brightness of the image generated utilizing the detection result output from the detecting elements 11 of the sensor unit 7 not covered by the filter unit 8. Therefore, in the example illustrated in FIG. 4, an area of the sensor unit 7 covered by the filter unit 8 is larger than an area of the sensor unit 7 not covered by the filter unit 8. In other words, the area of the sensor unit 7 not covered by the filter unit 8 is smaller than the area of the sensor unit 7 covered by the filter unit 8.

The sensor unit 7 detects each of the first X-rays transmitted through the article G and the second X-rays transmitted through the article G as well as the filter unit 8. The sensor unit 7 detects the first X-rays in the detecting elements 11 not covered by the filter unit 8. The sensor unit 7 detects the second X-ray in the detecting element 11 covered by the filter unit 8.

As illustrated in FIG. 1, the display operation unit 9 is a member (display unit) provided on the device main body 2. The display operation unit 9 displays various information and receives input operations of various conditions from the outside. The display operation unit 9 is, for example, a liquid crystal display and displays an operation screen as a touch panel. In this case, an operator can input various conditions via the display operation unit 9. For example, the operator can set the conveyance speed of the conveying unit 5, the power (at least one of current and voltage) supplied to the X-ray irradiation unit 6, or the like via the display operation unit 9. The input operation received by the display operation unit 9 is output to the conveying unit 5, the sensor unit 7, the control unit 10, or the like.

The control unit 10 is disposed in the device main body 2. The control unit 10 controls the operation of each component of the X-ray inspection device 1. The control unit 10 is constituted by a central processing unit (CPU), a read only memory (ROM), a random access memory (RAM), or the like. The ROM stores a program for controlling the X-ray inspection device 1, an operation mode of the X-ray inspection device 1, or the like.

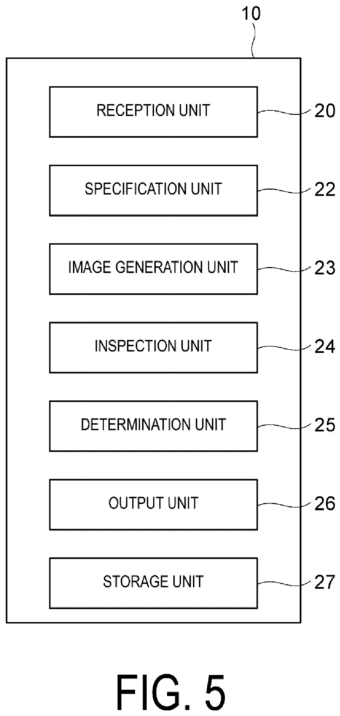

FIG. 5 is a functional configuration diagram of the control unit. As illustrated in FIG. 5, the control unit 10 includes a reception unit 21, a specification unit 22, an image generation unit 23, an inspection unit 24, a determination unit 25, an output unit 26, and a storage unit 27.

The reception unit 21 receives an input operation received by the display operation unit 9. The reception unit 21 receives, for example, the conveyance speed of the conveying unit 5 set via the display operation unit 9. Further, the reception unit 21 receives the detection result (specifically, detection result of X-rays output from each detecting element 11) output from the sensor unit 7. The reception unit 21 transmits the received detection result to the image generation unit 23.

The specification unit 22 specifies, using a predetermined threshold, the first X-ray and the second X-ray from the X-rays detected by the detecting elements 11 of the sensor unit 7. The specification unit 22 specifies, on the basis of the detection result of the sensor unit 7, each of the detecting elements 11 detecting the first X-ray and the second X-ray from among the plurality of detecting elements 11 (first detecting elements 12 and second detecting elements 13) using a predetermined threshold. The predetermined threshold may be an average value or a difference value of detection amounts of the first X-ray and the second X-ray. Further, the threshold may be automatically set on the basis of the output, or may be manually set by the operator on a setting screen of the display operation unit 9. The threshold can be changed. The specification unit 22 outputs a specification result to the image generation unit 23. Note that the specification unit 22 may add information related to a presence or an absence of the filter unit 8 to the specification result (output value) from the sensor unit 7 and transmit the specification result to the image generation unit 23.

The image generation unit 23 is mainly composed of, for example, a graphics processing unit (GPU), and generates an image on the basis of the detection results output from the sensor unit 7. For example, the image generation unit 23 develops signals of the received detection results described above into a two-dimensional image in a memory. The memory in which the two-dimensional image is developed is, for example, a memory included in the GPU, but is not limited thereto. For example, the image generation unit 23 reads the detection results described above output from at least some of the plurality of detecting elements 11 included in the sensor unit 7 at a predetermined read interval, and generates one or more time-delay integral images used for inspecting the article G. For example, a plurality of transmission images corresponding to each of the plurality of energy regions described above are generated by the image generation unit 23. Further, the image generation unit 23 may generate one or more difference images from the plurality of transmission images.

The image generation unit 23 may use, for example, an image processing algorithm or may use a program automatically set by machine learning. The image processing algorithm is composed of one image processing filter or a combination of a plurality of image processing filters. At least one of the plurality of image processing algorithms can be automatically generated from the plurality of image processing filters on the basis of the specifications, inspection conditions, or the like of the X-ray inspection device 1 by employing genetic algorithms (GAs), which are methods applying the mechanism of heredity and evolution in the biological world.

At least some of the plurality of image processing algorithms can also be set as appropriate by the operator via the display operation unit 9. The program automatically set by machine learning is a predictive model (learned model) generated by machine learning, and an inference program in which parameters (learned parameters) obtained as a result of machine learning are incorporated. Examples of machine learning used in the learned model include neural networks, support vector machines, and genetic algorithms.

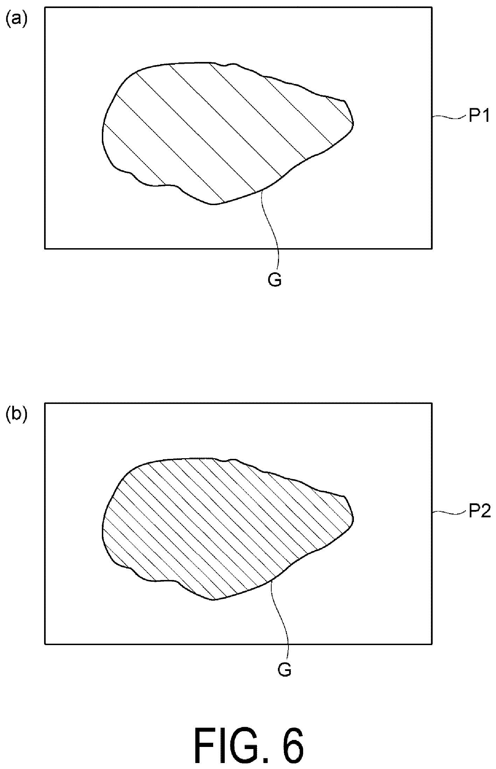

As illustrated in FIG. 6(a) and FIG. 6(b), the image generation unit 23 generates a first image P1 (refer to FIG. 6(a)) on the basis of the first X-rays in the first energy band, and a second image P2 on the basis of the second X-rays of the second energy band different from the first energy band, in accordance with the specification result by the specification unit 22. The first energy band is an energy band (low energy band) lower than the second energy band. The second energy band is an energy band (high energy band) higher than the first energy band. The first image P1 has relatively low contrast and is bright as a whole. The second image P2 has relatively high contrast and is dark as a whole.

One pixel included in the first image P1 and the second image P2 is generated, for example, by utilizing the detection result of the first detecting element 12 located at a predetermined location in one or more first columns C1. The first detecting element 12 located at a predetermined location refers to the first detecting element 12 located at a predetermined location counted from one end of the first column C1 in the crossing direction. Similarly, one pixel included in the first image P1 and the second image P2 is generated, for example, by utilizing the detection results of a plurality of the second detecting elements 13 located at predetermined locations in one or more second columns C2. The pixel is generated by summing the detection results of two or more second detecting elements 13 in one or more second columns C2 and utilizing the summation result. The image generation unit 23 may generate a difference image (combined image) from the first image P1 and the second image P2.

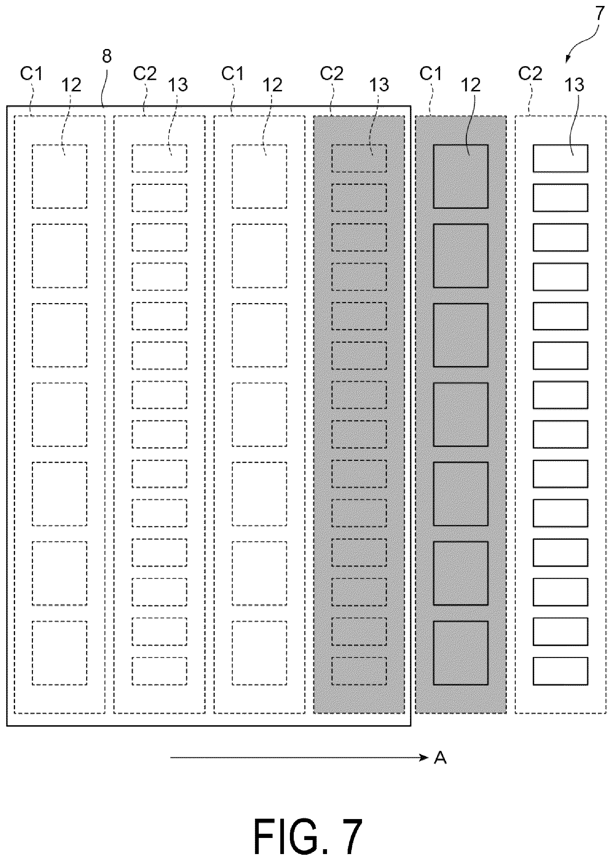

The image generation unit 23 does not use a detection result detected by at least one detecting element among the first detecting element 12 and the second detecting element 13 adjacent to each other in the crossing direction for image generation. In the present embodiment, the image generation unit 23 does not use the detection results of both the first detecting element 12 and the second detecting element 13 adjacent to each other in the crossing direction for image generation. More specifically, in the present embodiment, as illustrated in FIG. 7, the image generation unit 23 does not use the detection results of both the first detecting elements 12 (first row C1) and the second detecting elements 13 (second row C2) (portions shaded in gray) adjacent to each other in the crossing direction for image generation.

The inspection unit 24 inspects a quality of the article G on the basis of an image generated by the image generation unit 23. For example, the inspection unit 24 inspects the quality of the article G using the first image P1, the second image P2, the difference image, and the like. The inspection unit 24 may inspect the article G on the basis of both the difference image and the first image P1 as well as the second image P2. During the generation of the difference image by the image generation unit 23, the inspection of the article G based on the first image P1, the second image P2, and the like may be performed. In the present embodiment, the inspection unit 24 may select one image of the first image P1 or the second image P2 on the basis of the conveyance speed of the conveying unit 5, and inspect the quality of the article G on the basis of the image. The inspection unit 24 selects one image of the first image P1 or the second image P2 when the conveyance speed of the conveying unit 5 is equal to or greater than a predetermined threshold.

The inspection unit 24 inspects, for example, whether foreign matter is present or whether a chip/crack is present in the article G, as the quality of the article G, but is not limited to this. In a case in which the article G is wrapped in a sheet-like packaging material or the like, the inspection unit 24 can also inspect a break of the packaging material, a seal failure of the packaging material (seal bite), or the like. In a case in which the article G is housed in a package or the like, the inspection unit 24 can perform a foreign matter confirmation inspection, a missing part confirmation inspection, a housing number confirmation inspection, a cavity confirmation inspection, or the like, in the package. The inspection unit 24 transmits the inspection result of the article G to the determination unit 25 and the storage unit 27.

The determination unit 25 determines whether the article G is a non-defective article on the basis of the inspection result received from the inspection unit 24. For example, the determination unit 25 determines whether foreign matter is present in the article G, a chip/crack is present in the article G, or the like. The determination unit 25 transmits the determination result to the output unit 26 and the storage unit 27.

The output unit 26 outputs the determination result of the determination unit 25 to at least one of a portion other than the control unit 10 in the X-ray inspection device 1 or a device different from the X-ray inspection device 1. Accordingly, at least one of the X-ray inspection device 1 or a device different from the X-ray inspection device 1 (for example, a sorting device disposed downstream of the X-ray inspection device 1) can execute an operation when the article G is defective. Other examples of the above-mentioned device different from the X-ray inspection device 1 include, for example, the inbound conveyor 51, the outbound conveyor 52, and a notification device.

The storage unit 27 stores signals, data, or the like generated by the control unit 10. For example, the storage unit 27 stores the detection results transmitted from the reception unit 21, the image data transmitted from the image generation unit 23, the data related to the inspection results transmitted from the inspection unit 24, and the data related to the determination results transmitted from the determination unit 25.

As described above, the X-ray inspection device 1 according to an aspect of the present embodiment includes the filter unit 8 configured to reduce a portion of the energy included in the X-rays transmitted through the article G. Thus, in the X-ray inspection device 1, the detecting elements 11 of the sensor unit 7 detect each of the first X-ray transmitted through the article G and the second X-ray transmitted through the article G as well as the filter unit 8. With this configuration, the image generation unit 23 specifies each of the detecting elements 11 detecting the first X-ray and the second X-ray, and generates the first image P1 on the basis of the first X-ray of the first energy band and the second image P2 on the basis of the second X-ray of the second energy band different from the first energy band, in accordance with the specification result. Accordingly, in the X-ray inspection device 1, two images having different energy bands can be acquired by one sensor unit 7.

In the X-ray inspection device 1 according to the present embodiment, the filter unit 8 changes the number of columns of the detecting elements 11 subject to energy reduction. With this configuration, it is possible to match the brightnesses of the first image P1 and the second image P2 by changing the number of columns of the detecting elements 11 by the filter unit 8.

In the X-ray inspection device 1 according to the present embodiment, the inspection unit 24 selects one image of the first image P1 or the second image P2 on the basis of the conveyance speed of the conveying unit 5, and inspects the quality of the article G on the basis of the image. With this configuration, even when the conveyance speed increases, for example, only one image is selected, making it possible to avoid a situation in which a processing capacity cannot keep up with the conveyance speed.

Although embodiments of the present invention have been described above, the present invention is not necessarily limited to the above-described embodiments, and various modifications can be made without departing from the gist of the present invention.

In the embodiments described above, an embodiment in which the plurality of detecting elements 11 of the sensor unit 7 include the first detecting element 12 and the second detecting element 13 having different sizes has been described as an example. However, the detecting elements may be of the same type, all being of the same size.

In the embodiments described above, the sensor unit is a device capable of detecting X-rays by a photon counting method, but is not limited to this. The detecting element included in the sensor unit may include at least a scintillator and a photodiode.

### Reference Signs List

1 X-ray inspection device, 5 Conveying unit, 6 X-ray irradiation unit, 7 Sensor unit (X-ray detection unit), 8 Filter unit, 11 Detecting element, 12 First detecting element, 13 Second detecting element, 22 Specification unit, 23 Image generation unit, 24 Inspection unit, A Conveying direction, C1 First column, C2 Second column, G Article, P1 First image, P2 Second image.

## Claims

1. An X-ray inspection device (1) comprising:
a conveying unit (5) configured to convey an article (G) in a conveying direction (A);
an X-ray irradiation unit (6) configured to irradiate the article (G) conveyed by the conveying unit (5) with X-rays;
a filter unit (8) configured to reduce a portion of energy included in the X-rays transmitted through the article (G);
an X-ray detection unit (7) including a plurality of first detecting elements (12) and a plurality of second detecting elements (13),
the first detecting elements (12) being configured to detect a first X-ray transmitted through the article (G), and
the second detecting elements (13) being configured to detect a second X-ray transmitted through the article (G) as well as the filter unit (8);
an image generation unit (23) configured to respectively specify the first detecting elements (12) detecting the first X-ray and the second X-ray detecting elements (13) detecting the second X-ray in the X-ray detection unit (7), and generate a first image (P1) based on the first X-ray in a first energy band and a second image (P2) based on the second X-ray in a second energy band different from the first energy band in accordance with a specification result; and
an inspection unit (24) configured to inspect a quality of the article (G) based on the first image (P1) and the second image (P2).

2. The X-ray inspection device (1) according to claim 1, wherein
the plurality of first detecting elements (12) and the plurality of second detecting elements (13) are arrayed in a crossing direction horizontally intersecting the conveying direction (A), and
the filter unit (8) is configured to change a number of columns of the plurality of second detecting elements (13) subject to a reduction in the energy.

3. The X-ray inspection device according to claim 2, wherein
the image generation unit (23) is configured not to use a detection result detected by at least one column of the detecting elements (12, 13) from among the first detecting elements (12) and the second detecting elements (13) adjacent to each other in the conveying direction for image generation.

4. The X-ray inspection device (1) according to claim 2 or 3, wherein
the plurality of detecting elements (12, 13) include:
the first detecting elements (12) arranged in a first column (C1) in the crossing direction; and
the second detecting elements (13) arranged in a second column (C2) parallel to the first column (C1), and
a length of the first detecting elements (12) in the first column (C1) in the crossing direction is longer than a length of the second detecting elements (13) in the second column (C2) in the crossing direction.

5. The X-ray inspection device (1) according to any one of claims 1 to 4, wherein
the inspection unit (24) is configured to select one image of the first image (P1) or the second image (P2) based on a conveyance speed of the conveying unit (5), and inspect the quality of the article (G) based on the one image.

6. The X-ray inspection device (1) according to any one of claims 1 to 5, wherein
the inspection unit (24) is configured to inspect the quality of the article (G) based on a composite image obtained by combining the first image (P1) and the second image (P2).

7. The X-ray inspection device (1) according to any one of claims 1 to 6, comprising:
a specification unit (22) configured to use a predetermined threshold to specify the first X-ray and the second X-ray from the X-rays detected by the plurality of first detecting elements (12) and the plurality of second detecting elements (13), respectively.

8. The X-ray inspection device (1) according to any one of claims 1 to 7, wherein
the filter unit (8) is arranged such that the plurality of first detecting elements (12) detecting the first X-ray are configured to detect the X-ray which has not transmitted through the filter unit (8).

9. The X-ray inspection device (1) according to any one of claims 1 to 8, wherein
the filter unit (8) is disposed at a position where only the plurality of second detecting elements (13) are irradiated with the second X-ray.
